# EUROPÄISCHE PATENTSCHRIFT

(11) **EP 0 886 156 B1**
(45) Veröffentlichungstag und Bekanntmachung des Hinweises auf die Patenterteilung: **28.09.2005**
(21) Anmeldenummer: 98110143.9
(22) Anmeldetag: 04.06.1998
(51) Int. Cl.: G02B 6/44, H02G 15/00, H01R 13/58

(54) **Einrichtung zur Zugentlastung elektrischer und/oder optischer Leiter eines Kabels**
Device for stainrelief of electrical or optical conductors in a cable
Dispositif de soulagement de conducteurs électrique ou optique dans un câble

(30) Priorität: 18.06.1997 DE 19725732; 13.12.1997 DE 19755530
(43) Veröffentlichungstag der Anmeldung: 23.12.1998
(73) Patentinhaber: Harting Electric GmbH & Co. KG, 32339 Espelkamp (DE)
(72) Erfinder: Harting, Dietmar,, 32339 Espelkamp (DE); Brenner, Achim, Dr., 32312 Lübbecke (DE); Lambrecht, Heinz, Dipl.-Ing., 32312 Lübbecke (DE); Oberhokamp, Dirk, Dipl.-Ing., 32051 Herford (DE); Schreier, Stephan, Dipl.-Ing., 32369 Rahden (DE); Nowacki, Horst, Dipl.-Ing., 32312 Lübbecke (DE); Bokämper, Ralf, Dipl.-Ing., 32312 Lübbecke (DE)

(56) Entgegenhaltungen:
- EP-A- 0 563 995
- WO-A-97/06580
- DE-A- 2 931 331
- DE-A- 19 605 083
- US-A- 5 440 073

## Beschreibung

Die Erfindung betrifft eine Einrichtung zur Zugentlastung elektrischer und/oder optischer Leiter eines Kabels, wobei im Kabel parallel geführte Leiter in einem Kabelführungsteil gehalten und in Leiterführungskanäle eines Leiterführungsteils eingeschoben sind, und wobei die Achsen der Leiter im Kabelführungsteil und dem Leiterführungsteil gegeneinander versetzt sind.

Derartige Zugentlastungen sind notwendig, um die Kontaktstellen, welche von Ader und Kontaktelement gebildet werden, gegen äußere Krafteinleitung über das Kabel zu schützen und, um damit einen gleichmäßigen Kontaktdruck zwischen Ader und Kontaktelement zu gewährleisten.

Aus der WO 97/06580 sind Kabelanschlusselemente zum Anschluss von isolierten elektrischen Leitern bekannt, die aus mehreren nicht vormontierbaren Einzelteilen bestehen und über eine Kabelrutschsicherung innerhalb eines Isolierstückes (d.h. im schräg verlaufenden Bereich der Leiterführungskanäle) verfügen.

Ein Nachteil dieser bekannten Kabelrutschsicherung liegt darin, dass die Isolierung nach der Kontaktierung der einzelnen Ader im schräg verlaufenden Teil des Leiterführungskanals derart stark deformiert wird, dass die einzelne Ader sich nicht wiederholbar in den Leiterführungskanal einführen lässt, ohne dass die Ader gekürzt werden muss. Weiterhin ist es möglich, dass die Isolierung beim Lösen der Verbindung im Leiterführungskanal abreißt und ein wiederholtes Einführen der Ader verhindert.
Der Erfindung liegt die Aufgabe zugrunde, eine Zugentlastung der eingangs genannten Art dahingehend auszubilden, dass ein axiales Verschieben der Leiter beim Kontaktieren bzw. der Montage verhindert wird.

Diese Aufgabe wird dadurch gelöst, dass das Leiterführungsteil auf der Einführseite für die Leiter einen umlaufenden, sich in Längsrichtung erstreckenden Kragen aufweist, und dass in der dabei gebildeten ringförmigen Öffnung ein zentral angeordnetes Fixierelement vorgesehen ist, dass in dem Leiterführungsteil Leiterführungskanäle vorgesehen sind, deren Einführöffnungen in dem durch den umlaufenden Kragen und dem Fixierelement gebildeten Zwischenraum angeordnet sind, dass das Kabelführungsteil auf der Kabelaustrittsseite einen zylindrischen Ansatz aufweist, dessen äußerer Durchmesser dem durch den Kragen gebildeten Öffnung auf der Leitereinführseite des Leiterführungsteiles entspricht, wobei das Kabelführungsteil mit seiner Kabelaustrittsseite in die Öffnung auf der Leitereinführseite des Leiterführungsteiles einschiebbar ist, und dass die Kabelaustrittsseite des Kabelführungsteiles eine Ausnehmung aufweist, in die das Fixierelement beim Zusammenfügen von Kabelführungsteil und Leiterführungsteil eintaucht, wobei das Fixierelement mittig zwischen die Leiter gepresst ist und diese nach außen gegen die Wandung der Ausnehmung drückt.

Vorteilhafte Ausgestaltungen der Erfindung sind in den Ansprüchen 2 bis 10 angegeben.

Die mit der Erfindung erzielbaren Vorteile bestehen insbesondere darin, dass die einzelnen Komponenten zu einer montagefreundlichen Einheit vormontiert werden können und die so vormontierte Einheit eine Verliersicherung der Einzelkomponenten darstellt und dadurch nachfolgende Arbeiten, wie z.B. definiertes Abschneiden und Nachbehandeln der Leiter, erleichtert wird.

Ein weiterer Vorteil liegt darin, dass ein axiales Verschieben der Leiter während der Kontaktierung verhindert wird.

Ein weiterer Vorteil der Erfindung liegt bei einer weiteren Ausgestaltung darin, dass ein radiales Verdrehen des Kabels und der Leiter in bezug auf das Leiterführungsteil verhindert wird.
Ein Ausführungsbeispiel der Erfindung ist in der Zeichnung dargestellt und wird im folgenden näher beschrieben. Es zeigen
- Fig. 1: die Ansicht einer Einrichtung zur Zugentlastung für elektrische Leiter in einer geschnittenen, perspektivischen Darstellung,
- Fig. 2: die Ansicht der Einrichtung zur Zugentlastung gem. Fig. 1 in einer perspektivischen Explosionsdarstellung,
- Fig. 3: die vergrößerte Schnittansicht des Leiterführungskanals im Leiterführungsteil, mit keilförmigem Querschnitt, gemäß Fig. 1 entlang der Linie 3-3,
- Fig. 4: die Schnittansicht des Leiterführungskanals gemäß Fig. 3 entlang der Linie 4-4, und
- Fig. 5: die Ansicht der Einrichtung zur Zugentlastung in einer perspektivischen Explosionsdarstellung.

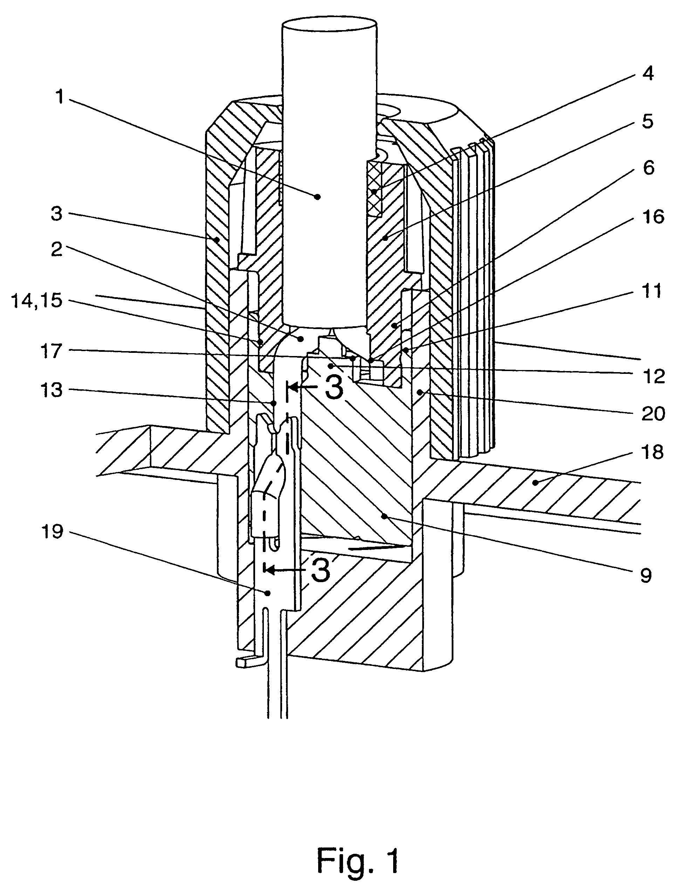

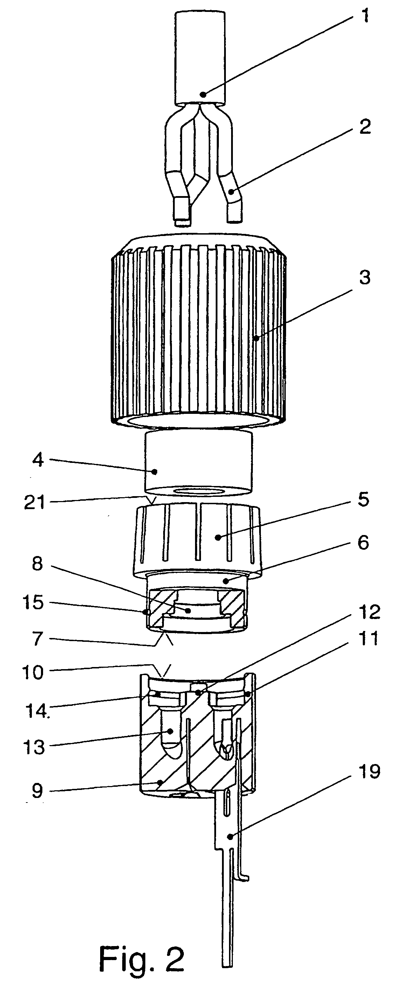

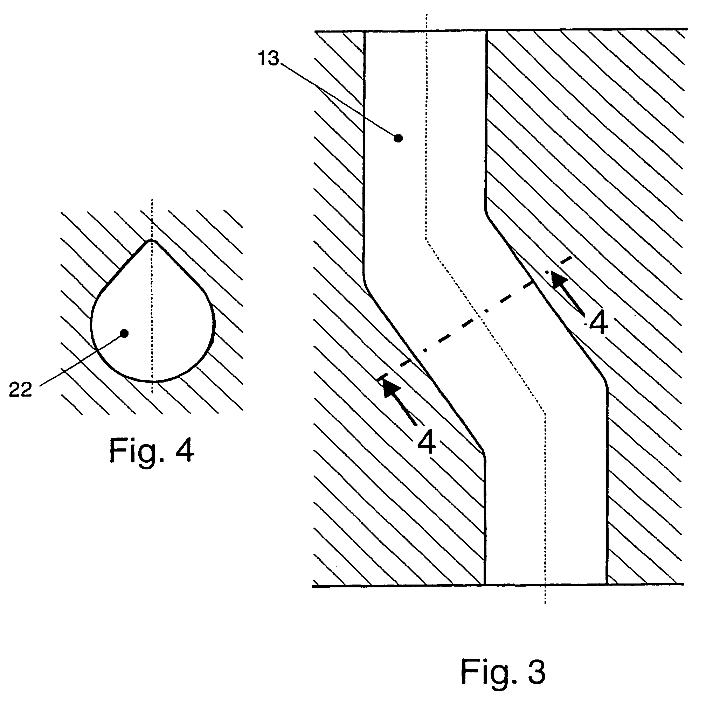

Zur Vereinfachung und besseren Erkennbarkeit von Einzelheiten ist in den Fig. 1 und Fig. 2 jeweils nur ein Leiter und eine Schneidklemme dargestellt. Leiterführungskanäle, in denen die Leiter geführt werden, sind in den Fig. 3 und Fig. 4 dargestellt.

Wie in den Fig. 1 und Fig. 2 dargestellt, ist eine Überwurfmutter 3 und ein Kabelführungsteil 5 über ein zugeführtes Kabel 1 geschoben. Ein Gummiring 4 ist im Kabelführungsteil 5 eingesetzt und dient der Zugentlastung des gesamten Kabels 1. Das Kabelführungsteil 5 besitzt auf der Kabelaustrittsseite 7 einen zylindrischen Ansatz 6, welcher eine zentrische, stufenförmige Ausnehmung 8 aufweist.
Das Kabel 1 ist an seinem, durch das Kabelführungsteil 5 geführten Ende abisoliert, so dass einzelne isolierte Leiter 2 aus dem Kabelmantel hervortreten. Das Leiterführungsteil 9 besitzt auf der Leitereinführseite 10 einen umlaufenden Kragen 11. Das Leiterführungsteil 9 weist auf der Leitereinführseite 10, innerhalb des umlaufenden Kragens 11, ein zentrisch angeordnetes, stufenförmiges Fixierelement 12 auf, welches entsprechend der stufenförmigen Ausnehmung 8 des zylindrischen Ansatzes 6 des Kabelführungsteils 5 gestaltet ist.
Zwischen dem umlaufenden Kragen 11 und dem Fixierelement 12 des Leiterführungsteils 9 befinden sich Einführöffnungen von Leiterführungskanälen 13, in welche die einzelnen Leiter 2 des Kabels eingeführt sind. Die Leiterenden werden so weit in die Leiterführungskanäle 13 eingeführt, bis sie auf der unteren Stirnfläche des Leiterführungsteils 9 austreten. Das Kabelführungsteil 5 wird mit seinem zylindrischen Ansatz 6 in den umlaufenden Kragen 11 des Kabelführungsteils 5 eingeführt.
Auf der Innenseite des umlaufenden Kragens 11 besitzt das Leiterführungsteil 9 eine umlaufende Erhebung 14, welche entsprechend einer umlaufenden Nut 15 auf der Außenfläche des zylindrischen Ansatzes 6 des Kabelführungsteils 5 gestaltet ist. Es kann ggf. auch vorgesehen sein, dass das Leiterführungsteil mit einer Nut und die Außenfläche des Ansatzes mit einer korrespondierenden Erhebung versehen ist. Bei der Montage von Kabelführungsteil 5 und Leiterführungsteil 9 werden beide Teile unter Druck zusammengeführt, bis die umlaufende Erhebung 14 des Leiterführungsteils in die umlaufende Nut 15 des Kabelführungsteils einrastet.
Das Fixierelement 12 befindet sich danach zentrisch zwischen den Leitern 2 und drückt diese gegen die stufenförmige Ausnehmung 8 des Kabelführungsteils 5. Die stufenförmigen Konturen in der Ausnehmung 8 im Kabelführungsteil 5 und am Fixierelement 12 des Leiterführungsteils 9 bilden Klemmkanten 16, 17, an denen die Leiter 2 durch die Montage beider Teile geklemmt und damit fixiert werden.
Die aus dem Leiterführungsteil 9 überstehenden Leiterenden werden an der Unterseite des Leiterführungteils 9 abgetrennt, so dass sie nicht mehr aus dem Leiterführungsteil hervortreten. Die vormontierte Einheit aus Kabelführungsteil 5 und Leiterführungsteil 9 wird in das Gehäuse 18 eingeführt und die Schneidklemmen 19, welche im Gehäuse 18 eingesetzt sind, dringen so in schlitzförmige Ausnehmungen auf der Unterseite des Leiterführungsteils 9 ein.
Die auf dem Kabel 1 geführte Überwurfmutter 3 wird auf einen Gewindestutzen 20 des Gehäuses 18 aufgeschraubt. Das Kabelführungsteil 5 wird auf der Kabeleintrittsseite 21 durch die sich nach oben hin verjüngende Überwurfmutter 3 zusammengedrückt und wirkt dadurch auf den im Kabelführungsteil 5 eingesetzten Gummiring 4. Dieser wirkt auf die im Gummiring geführte Kabel 1 und fixiert es, womit die Zugentlastung des gesamten Kabels realisiert wird.
Die Überwurfmutter 3 wird weiter auf den Gewindestutzen 20 des Gehäuses 18 geschraubt und führt das Kabelführungsteil 5 und damit auch das Leiterführungsteil 9 nach unten, über die im Gehäuse 18 eingesetzten Schneidklemmen 19. Die Schneidklemmen 19 Treffen im abgeknickten Verlauf des Leiterführungskanals 13 auf den jeweiligen Leiter 2 und drücken diesen in den keilförmigen Querschnitt 22 des Leiterführungskanals 13, wodurch der Leiter 2 gegenüber der jeweiligen Schneidklemme 19 zentriert wird. Die Schneidklemmen 19 dringen weiter in das Leiterführungsteil 9, durchdringen die Isolierung der Leiter 2 und kontaktieren diese.

Die vorstehend beschriebene Einrichtung zu Zugentlastung kann ggf. auch für die Zugentlastung von in ein Gehäuse bzw. Gerät einzuführenden Lichtwellenleitern ausgebildet werden. Dabei sind dann jedoch einige Modifikationen vorzusehen.

Da bei Lichtwellenleitern keine Schneidklemmen zum Einsatz kommen, entfällt auch der abgeknickte Verlauf des Leiterführungskanals 13. Der Leiterführungskanal 13 für Lichtwellenleiter darf keinen abgeknickten Verlauf aufweisen, so dass der Lichtwellenleiter keine unzulässig hohe Biegung erfährt.

Um die Isolierung des Lichtwellenleiters nicht zu beschädigen, wird das Fixierelement 12 kegelförmig ausgeführt und am Umfang mit geeigneten Klemmvorrichtungen 16, 17 ausgestattet. Durch die Montage von Kabelführungsteil 5 und Leiterführungsteil 9 wird die Lichtwellenleiter 2 fixiert. Die Lichtwellenleiter in der vormontierten Einheit werden dann auf der Unterseite des Leiterführungsteils 9 gekürzt und anschließend mit einer speziellen Vorrichtung poliert.

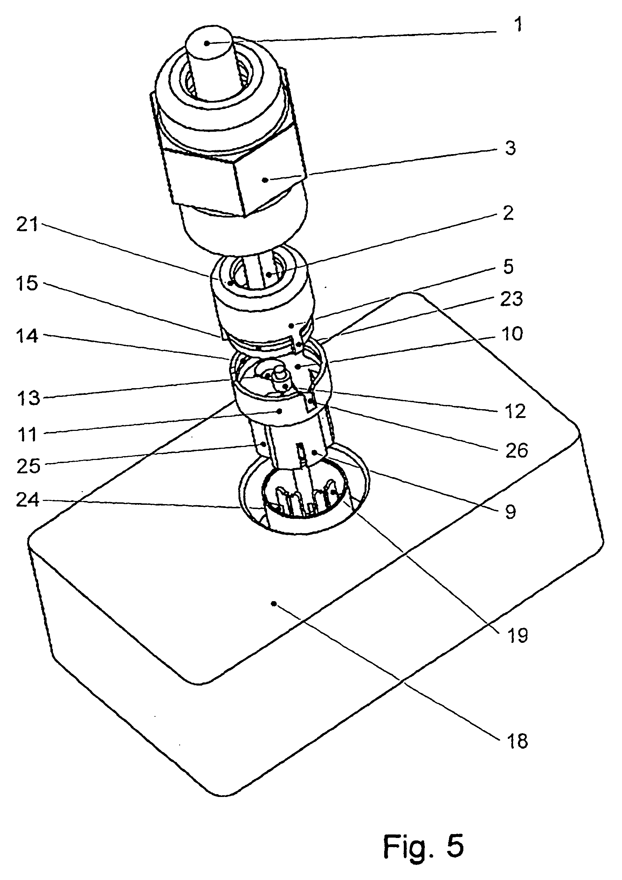

In der Fig. 5 ist eine abgewandelte Ausbildung einer Einrichtung zur Zugentlastung bei einem Gehäuse 18 gezeigt.
Dabei ist das Kabelführungsteil 5 mit mindestens einer Nase 23 versehen, die formschlüssig in eine Nut 26 des Leiterführungsteils 9 eingreift und so ein radiales Verdrehen des Kabelführungsteils in bezug auf das Leiterführungsteil 9 verhindert.
Auf der Innenseite des Kragens 11 besitzt das Leiterführungsteil 9 eine umlaufende Erhebung 14, welche entsprechend einer umlaufenden Nut 15 auf der Außenfläche des zylindrischen Ansatzes des Kabelführungsteils 5 gestaltet ist. Auch hier kann ggf. vorgesehen sein, dass das Leiterführungsteil mit einer Nut und die Außenfläche des Ansatzes mit einer korrespondierenden Erhebung versehen ist. Bei der Montage von Kabelführungsteil 5 und Leiterführungsteil 9 werden beide Teile unter Druck zusammengeführt, bis die umlaufende Erhebung 14 des Leiterführungsteils in die umlaufende Nut 15 des Kabelführungsteils einrastet. Das Fixierelement 12 befindet sich danach zentrisch zwischen den Leitern 2 und drückt diese gegen die stufenförmige Ausnehmung des Kabelführungsteils 5. Die stufenförmigen Konturen an Kabelführungsteil 5 und Leiterführungsteil 9 bilden Klemmkanten, an denen die Leiter 2 durch die Montage beider Teile geklemmt und damit fixiert werden.

Die aus dem Leiterführungsteil 9 überstehenden Leiterenden werden an der Unterseite des Leiterführungteils 9 abgetrennt, so dass sie nicht mehr aus dem Leiterführungsteil 9 hervortreten. Die vormontierte Einheit aus Kabelführungsteil 5 und Leiterführungsteil 9 wird in das Gehäuse 18 eingeführt. Das Leiterführungsteil 9 verfügt über Fixierelemente, wie z.B. Nasen 24, die in entsprechende Nuten 25 des Gehäuses 18 eingreifen. Dadurch wird die vormontierte Einheit ebenfalls gegen radiales Verdrehen gesichert.

Die Schneidklemmen 19, welche im Gehäuse 18 eingesetzt sind, dringen in schlitzförmige Ausnehmungen auf der Unterseite des Leiterführungsteils 9 ein. Die auf dem Kabel 1 geführte Überwurfmutter 3 wird mit dem Gehäuse 18 verschraubt. Das Kabelführungsteil 5 wird auf der Kabeleintrittsseite 21 durch die sich nach oben hin verjüngende Überwurfmutter 3 zusammengedrückt und wirkt dadurch auf den im Kabelführungsteil 5 eingesetzten Gummiring. Dieser wirkt auf das Kabel 1 und fixiert es, womit die Abdichtung und die Zugentlastung des gesamten Kabels realisiert ist.
Bei einer alternativen Lösung besteht das Kabelführungsteil 5 aus einem flexiblen Werkstoff, so dass auf den Gummiring verzichtet werden kann. Das Kabelführungsteil 5 übernimmt dann die Funktion der Zugentlastung und der Abdichtung.

Die Überwurfmutter 3 wird mit dem Gehäuse 18 verschraubt und führt das Kabelführungsteil 5 und damit auch das Leiterführungsteil 9 nach unten, über die im Gehäuse 18 eingesetzten Schneidklemmen 19. Die Schneidklemmen 19 treffen im abgeknickten Verlauf des Leiterführungskanals 13 auf den jeweiligen Leiter 2 und drücken diesen in den Leiterführungskanal 13. Die Schneidklemmen 19 dringen weiter in das Leiterführungsteil 9, durchdringen die Isolierung der Leiter 2 und kontaktieren diese.

## Patentansprüche

1. Einrichtung zur Zugentlastung elektrischer und/oder optischer Leiter eines Kabels, wobei im Kabel (1) parallel geführte Leiter (2) in einem Kabelführungsteil (5) gehalten und in Leiterführungskanäle (13) eines Leiterführungsteils (9) eingeschoben sind, und wobei die Achsen der Leiter im Kabelführungsteil (5) und dem Leiterführungsteil (9) gegeneinander versetzt sind, **dadurch gekennzeichnet,**
**dass** das Leiterführungsteil (9) auf der Einführseite (10) für die Leiter (2) einen umlaufenden, sich in Längsrichtung erstreckenden Kragen (11) aufweist, und dass in der dabei gebildeten ringförmigen Öffnung ein zentral angeordnetes Fixierelement (12) vorgesehen ist,
**dass** in dem Leiterführungsteil (9) Leiterführungskanäle (13) vorgesehen sind, deren Einführöffnungen in dem durch den umlaufenden Kragen (11) und dem Fixierelement (12) gebildeten Zwischenraum angeordnet sind,
**dass** das Kabelführungsteil (5) auf der Kabelaustrittsseite (7) einen zylindrischen Ansatz (6) aufweist, dessen äußerer Durchmesser der durch den Kragen (11) gebildeten Öffnung auf der Leitereinführseite (10) des Leiterführungsteiles (9) entspricht, wobei das Kabelführungsteil (5) mit seiner Kabelaustrittsseite (7) in die Öffnung auf der Leitereinführseite (10) des Leiterführungsteiles (9) einschiebbar ist, und
**dass** die Kabelaustrittsseite (7) des Kabelführungsteiles (5) eine Ausnehmung (8) aufweist, in die das Fixierelement (12) beim Zusammenfügen von Kabelführungsteil (5) und Leiterführungsteil (9) eintaucht, wobei das Fixierelement (12) mittig zwischen die Leiter (2) gepresst ist und diese nach außen gegen die Wandung der Ausnehmung (8) drückt.

2. Einrichtung zur Zugentlastung nach Anspruch 1, **dadurch gekennzeichnet,**
**dass** das Fixierelement (12) als zentrischer Zapfen ausgebildet ist.

3. Einrichtung zur Zugentlastung nach Anspruch 1 oder 2, **dadurch gekennzeichnet,**
**dass** das Kabelführungsteil (5) und der umlaufende Kragen (11) des Leiterführungsteils (9) mit Rastmitteln versehen sind, die beim Einschieben des Kabelführungsteils (5) in die durch den umlaufenden Kragen (11) gebildete umlaufende Erhöhung miteinander verrasten.

4. Einrichtung zur Zugentlastung nach einem der vorstehenden Ansprüche, **dadurch gekennzeichnet,**
**dass** die Leiterführungskanäle (13) das Leiterführungsteil (9) axial durchsetzen und einen zweifach abgeknickten Verlauf aufweisen, und
**dass** das Leiterführungsteil (9) mit schlitzförmigen Aufnahmeausnehmungen versehen ist, in die die Enden von Schneid-Klemm-Kontakten (19) einschiebbar sind, wobei diese Enden den abgeknickten Bereich der Leiterführungskanäle (13) durchsetzen.

5. Einrichtung zur Zugentlastung nach Anspruch 4, **dadurch gekennzeichnet,**
**dass** die Leiterführungskanäle (13) im abgeknickten Bereich einen keilförmigen Querschnitt (22) aufweisen.

6. Einrichtung zur Zugentlastung nach Anspruch 1, **dadurch gekennzeichnet,**
**dass** das Kabelführungsteil (5) und das Leiterführungsteil (9) mittels einer Nase (23) / Nut (26) - Verbindung formschlüssig, verdrehsicher miteinander fixiert sind.

7. Einrichtung zur Zugentlastung nach Anspruch 6, **dadurch gekennzeichnet,**
**dass** das Kabelführungsteil (5) und/oder das Leiterführungsteil (9) mittels einer Nase (24) / Nut (25) - Verbindung formschlüssig, verdrehsicher mit dem Gehäuse (18) fixiert sind.

8. Einrichtung zur Zugentlastung nach Anspruch 6 oder 7, **dadurch gekennzeichnet,**
**dass** das Kabelführungsteil (5) aus elastischem Material besteht, welches die Abdichtung des Gesamtsystems bewirkt und gleichzeitig die Kabelzugentlastung sicherstellt.

9. Einrichtung zur Zugentlastung nach Anspruch 1, **dadurch gekennzeichnet,**
**dass** die Ausnehmung (8) im Kabelführungsteil (5) stufenförmig ausgebildet ist.

10. Einrichtung zur Zugentlastung nach Anspruch 1, **dadurch gekennzeichnet,**
**dass** das Fixierelement (12) im Leiterführungsteil (9) stufig ausgebildet ist.

## Claims

1. A device for relieving the strain of electrical and/or optical conductors of a cable, wherein conductors (2) that are guided parallel to one another in the cable (1) are held in a cable guide section (5) and inserted into conductor guide channels (13) of a conductor guide section (9), and wherein the axes of the conductors are offset relative to one another in the cable guide section (5) and in the conductor guide section (9), **characterized in**
**that** the conductor guide section (9) contains a peripheral, longitudinally extending collar (11) on the insertion side (10) for the conductors (2), wherein a fixing element (12) is centrally arranged in the thusly formed annular opening, in
**that** the conductor guide section (9) contains conductor guide channels (13), the insertion openings of which are arranged in the intermediate space formed by the peripheral collar (11) and the fixing element (12), in
**that** the cable outlet side (7) of the cable guide section (5) contains a cylindrical projection (6), the outside diameter of which corresponds to the opening formed by the collar (11) on the conductor insertion side (10) of the conductor guide section (9), wherein the cable outlet side (7) of the conductor guide section (5) can be inserted into the opening on the conductor insertion side (10) of the conductor guide section (9), and in
**that** the cable outlet side (7) of the cable guide section (5) contains a recess (8) for accommodating the fixing element (12) when the cable guide section (5) and the conductor guide section (9) are connected to one another, wherein the fixing element (12) is centrally pressed between the conductors (2) and presses the conductors outward against the wall of the recess (8).

2. The strain relief device according to Claim 1, **characterized in that** the fixing element (12) is realized in the form of a central pin.

3. The strain relief device according to Claim 1 or 2, **characterized in that** the cable guide section (5) and the peripheral collar (11) of the conductor guide section (9) are provided with catch elements that engage when the cable guide section (5) is inserted into the peripheral elevation formed by the peripheral collar (11).

4. The strain relief device according to one of the preceding claims,
**characterized in**
**that** the conductor guide channels (13) axially penetrate the conductor guide section (9) and contain a double-bend, and in
**that** the conductor guide section (9) is provided with slot-shaped receptacle recesses, into which the ends of insulation-piercing contacts (19) can be inserted, wherein these ends penetrate the bent region of the conductor guide channels (13).

5. The strain relief device according to Claim 4, **characterized in that** the conductor guide channels (13) have a wedge-shaped cross section (22) in the bent region.

6. The strain relief device according to Claim 1, **characterized in that** the cable guide section (5) and the conductor guide section (9) are positively fixed to one another in a non-rotatable fashion by means of a tongue (23) and groove (26) connection.

7. The strain relief device according to Claim 6, **characterized in that** the cable guide section (5) and/or the conductor guide section (9) is/are positively fixed to the housing (18) in a non-rotatable fashion by means of a tongue (24) and groove (25) connection.

8. The strain relief device according to Claim 6 or 7, **characterized in that** the cable guide section (5) consists of an elastic material that forms the seal of the entire system and simultaneously ensures that the strain of the cable is relieved.

9. The strain relief device according to Claim 1, **characterized in that** the recess (8) in the cable guide section (5) is realized in a stepped fashion.

10. The strain relief device according to Claim 1, **characterized in that** the fixing element (12) in the conductor guide section (9) is realized in a stepped fashion.

## Revendications

1. Dispositif de décharge de traction de conducteurs électriques et/ou optiques dans un câble, dans le câble (1), des conducteurs (2) guidés en parallèle étant maintenus dans un élément de guidage du câble (5) et insérés dans des conduites de guidage des conducteurs (13) d'un élément de guidage des conducteurs (9) et étant déportés par rapport à l'élément de guidage des conducteurs (9), **caractérisé en ce que** sur le côté d'introduction (10) des conducteurs, l'élément de guidage des conducteurs (9) comporte une collerette périphérique (11) pour les conducteurs (2) qui s'étend en direction longitudinale et **en ce qu'**un élément de fixation (12) à disposition centrale est prévu dans l'orifice annulaire formé à cet effet,
des conduites de guidage des conducteurs (13), dont les orifices d'introduction sont disposés dans l'espace intermédiaire formé par la collerette périphérique (11) et l'élément de fixation (12) sont disposés dans l'élément de guidage des conducteurs (9),
sur le côté de sortie du câble (7), l'élément de guidage du câble (5) comporte un embout cylindrique (6) dont le diamètre extérieur correspond à l'orifice formé par la collerette (11) sur le côté d'introduction des conducteurs (10) de l'élément de guidage des conducteurs (9), l'élément de guidage du câble (5) pouvant être inséré par son côté de sortie du câble (7) dans l'orifice du côté d'introduction des conducteurs (10) de l'élément de guidage des conducteurs (9) et le côté de sortie du câble (7) de l'élément de guidage du câble (5) comporte un évidement (8), dans lequel l'élément de fixation (12) plonge lorsqu'on rassemble l'élément de guidage du câble (5) et l'élément de guidage des conducteurs (9), l'élément de fixation (12) étant pressé au centre entre les conducteurs (2) et appuyant ces derniers vers l'extérieur, contre la paroi de l'évidement (8).

2. Dispositif de décharge de traction selon la revendication 1, **caractérisé en ce que**
l'élément de fixation (12) est conçu en tant que tenon centré.

3. Dispositif de décharge de traction selon la revendication 1 ou 2,
**caractérisé en ce que**
l'élément de guidage du câble (5) et la collerette périphérique (11) de l'élément de guidage des conducteurs (9) sont munis de moyens d'enclenchement, qui lors de l'insertion de l'élément de guidage du câble (5) dans le relief formé par la collerette périphérique (11) s'enclenchent entre eux.

4. Dispositif de décharge de traction selon l'une quelconque des revendications précédentes, **caractérisé en ce que**
les conduites de guidage des conducteurs (13) traversent l'élément de guidage des conducteurs (9) en direction axiale et comportent un trajet doublement coudé, et **en ce que** l'élément de guidage des conducteurs (9) est muni d'évidements de réception en forme d'encoches, dans lesquels les extrémités de contacts par borne guillotine (19) sont insérables, ces extrémités traversant la zone coudée des conduites de guidage des conducteurs (13).

5. Dispositif de décharge de traction selon la revendication 4, **caractérisé en ce que**
les conduites de guidages des conducteurs (13) présentent une section transversale cunéiforme (22) dans la région coudée.

6. Dispositif de décharge de traction selon la revendication 1, **caractérisé en ce que**
l'élément de guidage du câble (5) et l'élément de guidage des conducteurs (9) sont fixés entre eux par complémentarité de forme, de façon sécurisée contre la torsion par une liaison par rainure (26) et languette (23).

7. Dispositif de décharge de traction selon la revendication 6, **caractérisé en ce que**
l'élément de guidage du câble (5) et/ou l'élément de guidage des conducteurs (9) sont fixés par complémentarité de forme, de façon sécurisée contre la torsion sur le boîtier (18), par liaison par rainure (25) et languette (24).

8. Dispositif de décharge de traction selon la revendication 6 ou 7, **caractérisé en ce que**
l'élément de guidage du câble (5) est en un matériau élastique, qui provoque l'étanchéité de l'ensemble du système et assure parallèlement la décharge de traction du câble.

9. Dispositif de décharge de traction selon la revendication 1, **caractérisé en ce que**
l'évidement (8) dans l'élément de guidage du câble (5) est de forme échelonnée.

10. Dispositif de décharge de traction selon la revendication 1, **caractérisé en ce que**
l'élément de fixation (12) dans l'élément de guidage des conducteurs (9) est de forme échelonnée.
